# EUROPEAN PATENT SPECIFICATION

(11) **EP 4 474 336 B1**
(45) Date of publication and mention of the grant of the patent: **22.04.2026**
(21) Application number: 24177003.1
(22) Date of filing: 21.05.2024
(51) Int. Cl.: B66F 9/075, B60L 15/20, B62D 6/00, B66F 9/24

(54) **FORKLIFT TRUCK AND METHOD FOR CONTROLLING THEREOF**
GABELSTAPLER UND VERFAHREN ZUR STEUERUNG DAVON
CHARIOT ÉLÉVATEUR À FOURCHE ET SON PROCÉDÉ DE COMMANDE

(30) Priority: 09.06.2023 JP 2023095635; 18.04.2024 JP 2024067652
(43) Date of publication of application: 11.12.2024
(73) Proprietor: KABUSHIKI KAISHA TOYOTA JIDOSHOKKI, Kariya-shi, Aichi-ken 448-8671 (JP)
(72) Inventor: ISHIMURA, Shota, Kariya-shi 448-8671 (JP); YAMADA, Takefumi, Kariya-shi 448-8671 (JP)
(74) Representative: TBK

(56) References cited:
- GB-A- 2 398 442
- JP-A- 2003 235 114
- US-A1- 2011 297 486

## Description

### BACKGROUND ART

The present invention relates to a forklift truck and a method for controlling the forklift truck.

A vehicle disclosed in Japanese Patent Application Publication No. JP 2020 - 068 596 A, which is referred to as a first publication, includes a travelling motor, an inverter that drives the travelling motor, and a controller that controls the inverter. The controller causes the vehicle to travel by power-running operation of the travelling motor. The controller brakes the vehicle by regenerative operation of the travelling motor. The controller performs a feedback control such that a rotational speed of the travel motor follows a target rotational speed. The feedback control is performed so that a future error between the rotational speed of the travelling motor and the target rotational speed is decreased. A proportional-integral control is used as the feedback control, for example. A forklift truck disclosed in Japanese Patent Application Publication No. JP 2023 - 046 547 A includes a load handling device. The load handling device includes forks and masts.

A forklift truck may perform an inserting operation. The inserting operation is an operation of deeply inserting forks under a placed load. For example, in order to prevent the load from falling from the forks while the forklift truck is travelling, the forklift truck performs the inserting operation when the load is relatively moved to base ends of the forks. The inserting operation brings the load into contact with the masts or a load backrest. Even when an accelerator member of the forklift truck is operated in this state, the forklift truck does not travel because of a static friction force generated at an interface between the load and a place where the load is placed. That is, when the accelerator member is operated, the error between the target rotational speed and the rotational speed of the travelling motor increases.

As disclosed in the first publication, when the feedback control such that the rotational speed of the travelling motor follows the target rotational speed is performed, torque generated in the travelling motor is increased as the error between the target rotational speed and the rotational speed of the travelling motor increases. Thus, while the inserting operation is performed, the torque is increased as the error increases. When the accelerator member is no longer operated upon completion of the inserting operation, the error becomes zero. When the error becomes zero, the torque generated right before is maintained, so that the torque remains in the travelling motor even though the accelerator member is no longer operated. When the forks are raised in this state, the load and the place where the load is placed are no longer in contact with each other, so that a static frictional force ceases to act on the forklift truck. Then, the remaining torque may cause the forklift truck to travel. This may cause an operator of the forklift truck to feel strange in maneuverability of the forklift truck.

Document US 2011/297486 A1 discloses a forklift which includes linear actuators that convert rotational motion into linear motion, the linear actuators being provided in a plurality of fork parts of a cargo handling drive device. The forklift includes induction motors that drive each of the plurality of actuators provided in the plurality of fork parts, an inverter that drives the induction motors in the same manner, and a controller that controls the inverter, and the controller computes a slip frequency by using the lowest detection value among detection values from detectors that detect each of rotation speeds of the plurality of induction motors. Document US 2011/297486 A1 discloses the preamble of claims 1,4.

### SUMMARY

In accordance with an aspect of the present invention, there is provided a forklift truck that includes an accelerator member, a travelling motor, an inverter that drives the travelling motor, and a controller that controls the inverter. The controller obtains a rotational speed command in accordance with an amount of operation of the accelerator member. The controller calculates a target rotational speed based on the rotational speed command, an acceleration command, and a deceleration command. The controller calculates an error between a rotational speed of the travelling motor and the target rotational speed. The controller calculates an output ratio of the travelling motor based on the error, a proportional gain, and an integral gain. The controller calculates a torque current command value based on the output ratio and a torque current curve. The controller converts the torque current command value into a command value for the inverter to perform a control of the travelling motor such that the rotational speed of the travelling motor follows the target rotational speed. A component of the output ratio that contributes to acceleration of the forklift truck is defined as an acceleration component. A component of the output ratio that contributes to braking of the forklift truck is defined as a braking component. The controller accumulates a difference between the output ratio at a current control cycle and the output ratio at a previous control cycle as the acceleration component when torque of the travelling motor at the current control cycle is not changed so as to go through zero from the torque of the travelling motor at the previous control cycle and when either of a first condition in which an absolute value of the output ratio at the current control cycle is an absolute value of the output ratio at the previous control cycle or less or a second condition in which a product between the rotational speed command and the output ratio at the current control cycle is more than zero is satisfied. The controller calculates an acceleration output ratio with a predetermined maximum number as an upper limit from the acceleration component and the output ratio at the current control cycle. The controller sets the output ratio at the current control cycle to a value obtained by decreasing only the acceleration component of the output ratio at the previous control cycle by a predetermined value when the rotational speed command at the current control cycle is zero and the acceleration output ratio is a value excluding zero.

In accordance with another aspect of the present invention, there is provided a method for controlling a forklift truck that includes an accelerator member, a travelling motor, an inverter that drives the travelling motor, and a controller that controls the inverter. The method for controlling the forklift truck includes obtaining a rotational speed command in accordance with an amount of operation of the accelerator member by the controller, calculating a target rotational speed based on the rotational speed command, an acceleration command, and a deceleration command by the controller, calculating an error between a rotational speed of the travelling motor and the target rotational speed by the controller, calculating an output ratio of the travelling motor based on the error, a proportional gain, and an integral gain by the controller, calculating a torque current command value based on the output ratio and a torque current curve by the controller, and converting the torque current command value into a command value for the inverter to perform a control of the travelling motor such that the rotational speed of the travelling motor follows the target rotational speed by the controller. A component of the output ratio that contributes to acceleration of the forklift truck is defined as an acceleration component. A component of the output ratio that contributes to braking of the forklift truck is defined as a braking component. The method for controlling the forklift truck includes accumulating a difference between the output ratio at a current control cycle and the output ratio at a previous control cycle as the acceleration component by the controller when torque of the travelling motor at the current control cycle is not changed so as to go through zero from the torque of the travelling motor at the previous control cycle and either of a first condition in which an absolute value of the output ratio at the current control cycle is an absolute value of the output ratio at the previous control cycle or less or a second condition in which a product between the rotational speed command and the output ratio at the current control cycle is more than zero is satisfied, calculating an acceleration output ratio with a predetermined maximum number as an upper limit from the acceleration component and the output ratio at the current control cycle, and setting the output ratio at the current control cycle to a value obtained by decreasing only the acceleration component of the output ratio at the previous control cycle by a predetermined value by the controller when the rotational speed command at the current control cycle is zero and the acceleration output ratio is a value excluding zero.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a perspective view illustrating a forklift truck;
FIG. 2 is a schematic configuration diagram illustrating the forklift truck;
FIG. 3 is a schematic configuration diagram illustrating a function of an output ratio determiner;
FIG. 4 is a flowchart showing an acceleration torque subtraction control;
FIG. 5 is a flowchart showing the acceleration torque subtraction control;
FIG. 6 is a flowchart showing an acceleration torque calculation control;
FIG. 7 is a graph showing an increase or decrease of torque;
FIG. 8 is a table showing classification into acceleration torque and braking torque;
FIG. 9 is a graph showing a rotational speed command, an output ratio, and an actual rotational speed of a forklift truck according to a comparative example; and
FIG. 10 is a graph showing a rotational speed command, an output ratio, and an actual rotational speed of a forklift truck according to an embodiment.

### DETAILED DESCRIPTION OF THE EMBODIMENTS

The following will describe an embodiment of a forklift truck and a method for controlling the forklift truck.

### <Forklift truck>

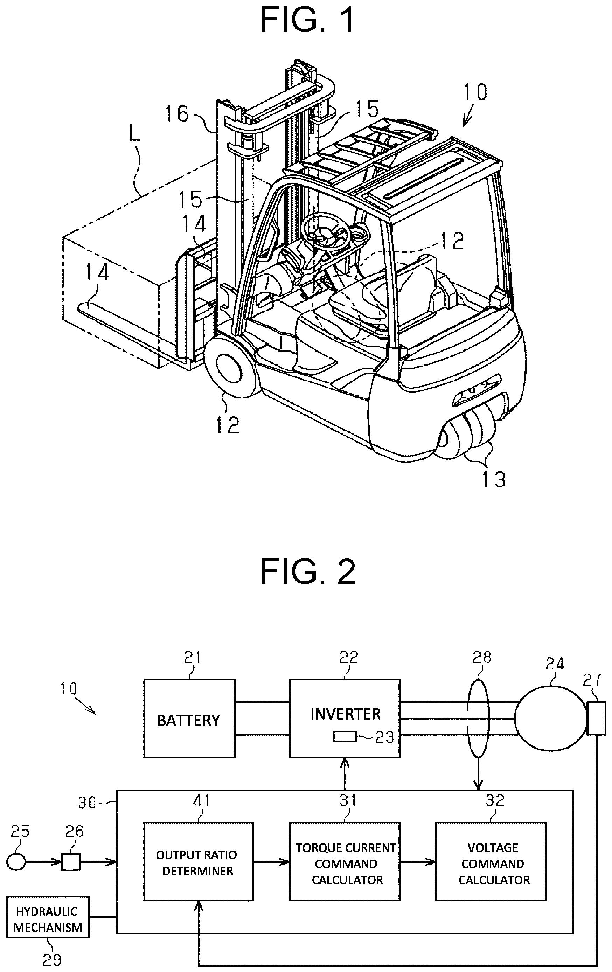

As illustrated in FIG. 1, a forklift truck 10 includes driving wheels 12 and steering wheels 13. The forklift truck 10 may be a counter-type forklift truck or a reach-type forklift truck.

The forklift truck 10 includes forks 14, lift cylinders 15, and masts 16. A load L is loaded on the forks 14. The lift cylinders 15 are hydraulic cylinders. The forks 14 move up and down along the masts 16 when hydraulic oil is supplied to or discharged from the hydraulic cylinders.

As illustrated in FIG. 2, the forklift truck 10 includes a battery 21. The battery 21 is formed of a plurality of power storage devices connected to each other, for example. Any power storage device may be used as long as it is chargeable and dischargeable. Examples of the power storage devices are a lead-acid battery, a lithium ion secondary battery, and a nickel-metal hydride battery.

The forklift truck 10 includes an inverter 22. The inverter 22 is, for example, a three-phase inverter that converts DC power into three-phase AC power. The inverter 22 is electrically connected to the battery 21. The inverter 22 is configured to convert the DC power input from the battery 21 into the AC power, and outputs the AC power. The inverter 22 includes, for example, switching elements 23, and is configured to convert the DC power into the AC power by switching operation of the switching elements 23.

The forklift truck 10 includes a travelling motor 24. The travelling motor 24 is, for example, a three-phase AC rotating electrical machine. The travelling motor 24 is driven by the inverter 22. The travelling motor 24 serves as an electric motor while power is supplied from the inverter 22 to the travelling motor 24 to generate a rotational driving force. This rotational driving force is transmitted to the driving wheels 12 through an axel, which causes the forklift truck 10 to travel. The travelling motor 24 serves as a power generator while the forklift truck 10 brakes to a stop to generate regenerative power. The regenerative power generated by the travelling motor 24 is supplied to the battery 21 through the inverter 22. Thus, the travelling motor 24 is a motor generator that performs power-running operation and regenerative operation.

The forklift truck 10 brakes by a regenerative braking force generated by the travelling motor 24. The forklift truck 10 does not include a mechanical brake such as a disc brake or a drum brake. That is, the forklift truck 10 includes only the travelling motor 24 as a braking device.

When the forklift truck 10 includes the plurality of driving wheels 12, the travelling motor 24 may be provided for each of the driving wheels 12. In this case, the inverter 22 also may be provided for each travelling motor 24. The forklift truck 10 is an electric forklift truck that is driven by the travelling motor 24.

The forklift truck 10 includes an accelerator member 25. The accelerator member 25 is a member that is operated for driving the forklift truck 10. In the forklift truck 10 of the counter-type, the accelerator member 25 is an accelerator pedal, for example. In the forklift truck 10 of the reach-type, the accelerator member 25 is a direction lever, for example.

The forklift truck 10 includes an accelerator sensor 26. The accelerator sensor 26 detects an amount of operation of the accelerator member 25. The accelerator sensor 26 outputs electrical signals in accordance with the amount of operation of the accelerator member 25.

The forklift truck 10 includes a rotational speed sensor 27. The rotational speed sensor 27 outputs electrical signals in accordance with a rotational speed [rpm] of the travelling motor 24. The rotational speed sensor 27 is, for example, a resolver or an encoder.

The forklift truck 10 includes a phase current detector 28. The phase current detector 28 detects phase currents flowing through the travelling motor 24. The phase current detector 28 detects the phase currents in at least two phases. Here, the phase current detector 28 may detect the phase currents in the two phases of three phases, and calculate a phase current in the remaining phase based on the detected phase currents in the two phases.

The forklift truck 10 includes a hydraulic mechanism 29. The hydraulic mechanism 29 supplies or discharges the hydraulic oil to or from hydraulic devices provided in the forklift truck 10. The hydraulic mechanism 29 includes, for example, a pump that discharges the hydraulic oil and a control valve that controls a feed rate and a destination of the hydraulic oil. The hydraulic devices provided in the forklift truck 10 include the lift cylinders 15.

The forklift truck 10 includes a controller 30. The controller 30 includes a processor and a storage unit. Examples of the processor include a CPU (Central Processing Unit), a GPU (Graphics Processing Unit), and a DSP (Digital Signal Processor). The storage unit includes a RAM (Random Access Memory) and a ROM (Read Only Memory). A program for operating the forklift truck 10 is stored in the storage unit. The storage unit stores program codes or commands configured to cause the processor to execute processes. The storage unit, that is, a computer readable medium, includes any media accessible by general or dedicated computers. The controller 30 may include a hardware circuit, such as an ASIC (Application Specific Integrated Circuit) or an FPGA (Field Programmable Gate Array). The controller 30, which is a processing circuit, may include one or more processors that operate according to a computer program, one or more hardware circuits such as the ASIC or the FPGA, or a combination thereof.

The controller 30 receives the electrical signals from the accelerator sensor 26. The controller 30 obtains an amount of accelerator operation based on the electrical signals received from the accelerator sensor 26. The controller 30 receives the electrical signals from the rotational speed sensor 27. The controller 30 obtains the rotational speed of the travelling motor 24 based on the electrical signals received from the rotational speed sensor 27. Hereinafter, the rotational speed of the travelling motor 24 obtained due to the rotational speed sensor 27 is appropriately referred to as an actual rotational speed. A positive or negative sign of the actual rotational speed [rpm] depends on a rotational direction of the travelling motor 24. For example, while the travelling motor 24 rotates in a clockwise direction when the actual rotational speed has the positive sign, the travelling motor 24 rotates in a counterclockwise direction when the actual rotational speed has the negative sign.

The controller 30 controls the hydraulic mechanism 29. For example, the controller 30 controls the hydraulic mechanism 29 in order to move the forks 14 up and down.

The controller 30 controls the inverter 22. The controller 30 includes an output ratio determiner 41, a torque current command calculator 31, and a voltage command calculator 32. The output ratio determiner 41, the torque current command calculator 31, and the voltage command calculator 32 each correspond to a functional unit which is caused to function by the controller 30 executing a predetermined process.

The output ratio determiner 41 determines an output ratio [%] of the travelling motor 24.

The torque current command calculator 31 calculates a torque current command value. The torque current command value is sometimes referred to as a q-axis current command value. The torque current command calculator 31 calculates the torque current command value based on the output ratio determined by the output ratio determiner 41 and a torque current curve.

The voltage command calculator 32 calculates a voltage command value based on an error between the torque current command value and a torque current and an error between an excitation current command value and an excitation current. The excitation current command value is calculated by the controller 30. The excitation current command value is sometimes referred to as a d-axis current command value. The torque current is a component of the current flowing through the travelling motor 24, which generates torque. The excitation current is a component of the current flowing through the travelling motor 24, which generates magnetic flux. The torque current and the excitation current are calculated from the phase currents. The voltage command calculator 32 calculates the voltage command value that makes a future error between the torque current command value and the torque current and a future error between the excitation current command value and the excitation current smaller than the current error between the torque current command value and the torque current and the current error between the excitation current command value and the excitation current. The inverter 22 is controlled based on the voltage command value. The voltage command value is a command value for the inverter 22. Thus, the controller 30 converts the torque current command value into the command value for the inverter 22 to control the travelling motor 24 so that the rotational speed of the travelling motor 24 follows the target rotational speed.

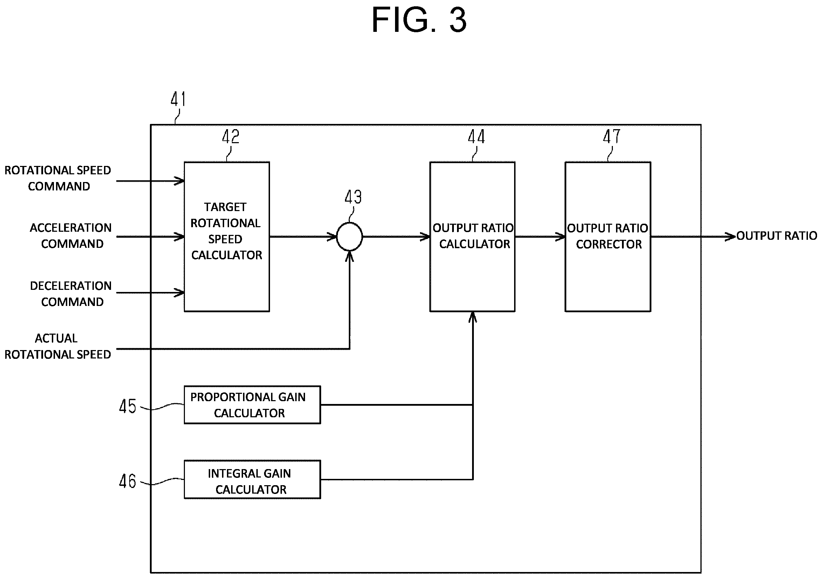

As illustrated in FIG. 3, the output ratio determiner 41 includes a target rotational speed calculator 42, a subtraction unit 43, an output ratio calculator 44, a proportional gain calculator 45, an integral gain calculator 46, and an output ratio corrector 47.

The target rotational speed calculator 42 calculates the target rotational speed based on a rotational speed command, an acceleration command, and a deceleration command. The rotational speed command is calculated based on the amount of accelerator operation, for example. The target rotational speed calculator 42 may calculate the rotational speed command in accordance with the amount of accelerator operation. The target rotational speed calculator 42 may obtain the rotational speed command from the host controller. The positive or negative sign of the rotational speed command depends on whether the forklift truck 10 is instructed to move forward or rearward. For example, when the forklift truck 10 is instructed to move forward by the direction lever, the rotational speed command has the positive sign. When the forklift truck 10 is instructed to move rearward by the direction lever, the rotational speed command has the negative sign. For example, the acceleration command is calculated based on a past error between the target rotational speed and the actual rotational speed. The deceleration command is calculated based on the past error between the target rotational speed and the actual rotational speed. The target rotational speed is a target value of the rotational speed that the actual rotational speed follows at the acceleration instructed by the acceleration command or at the deceleration instructed by the deceleration command.

The subtraction unit 43 calculates a speed error that is an error between the target rotational speed and the actual rotational speed.

The output ratio calculator 44 calculates the output ratio based on the speed error, a proportional gain, and an integral gain. The output ratio calculator 44 calculates the output ratio that causes the future speed error to approach zero, based on the proportional gain and the integral gain. The output ratio determiner 41 calculates the output ratio by a proportional-integral control as a feedback control.

When the travelling motor 24 performs the power-running operation, the actual rotational speed and the output ratio have the same positive or negative sign. When the travelling motor 24 performs the regenerative operation, the actual rotational speed and the output ratio have the opposite positive or negative sign. For example, in the power-running operation of the travelling motor 24, when the actual rotational speed has a positive value, the output ratio also has a positive value. For example, in the regenerative operation of the travelling motor 24, when the actual rotational speed has a positive value, the output ratio has a negative value. The output ratio calculated by the output ratio calculator 44 is appropriately referred to as a speed control output ratio.

The proportional gain calculator 45 calculates the proportional gain. The proportional gain is calculated based on the amount of accelerator operation and the actual rotational speed of the travelling motor 24, for example.

The integral gain calculator 46 calculates the integral gain. The integral gain is calculated based on the amount of accelerator operation and the actual rotational speed of the travelling motor 24, for example.

The output ratio corrector 47 corrects the speed control output ratio. Then, the output ratio corrector 47 outputs the output ratio. The output ratio determiner 41 outputs the output ratio at a predetermined control cycle.

The controller 30 has a boost mode. The boost mode is a mode in which the torque of the travelling motor 24 is temporarily increased to a certain value. The controller 30 enters the boost mode when the rotational speed command is more than a threshold value, the actual rotational speed is less than the threshold value, the output ratio is 100 [%], and the state satisfying these conditions continues for a predetermined period of time. In this state, even though the output ratio is set to 100 [%], there is a large discrepancy between the actual rotational speed and the rotational speed command. Accordingly, the controller 30 performs a control such that the discrepancy between the actual rotational speed and the rotational speed command decreases by increasing the torque temporarily. The threshold value and the predetermined period of time may be set as desired. A mode in a case where the boost mode is not set is appropriately referred to as a normal mode.

The output ratio corrector 47 performs an acceleration torque subtraction control and an acceleration torque calculation control. The method for controlling the forklift truck 10 is executed by the controller 30 due to these two controls.

### <Acceleration torque subtraction control>

The following will describe the acceleration torque subtraction control performed by the output ratio corrector 47.

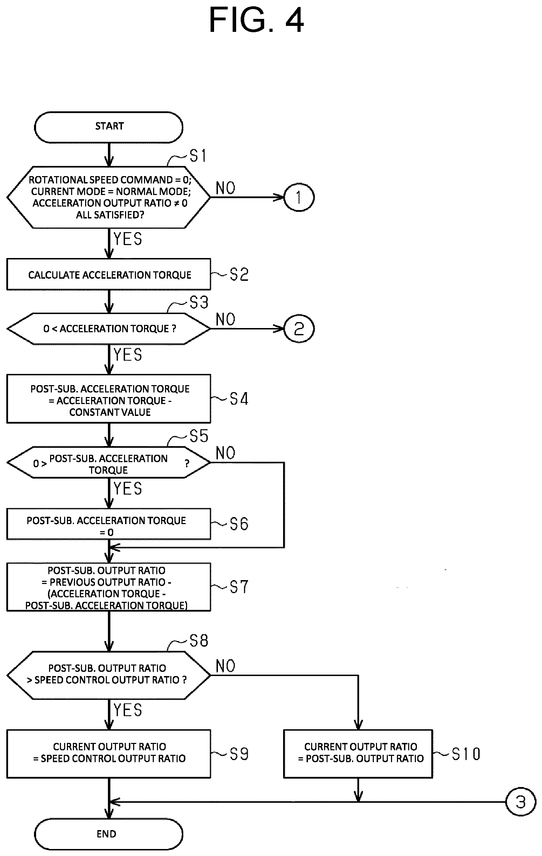

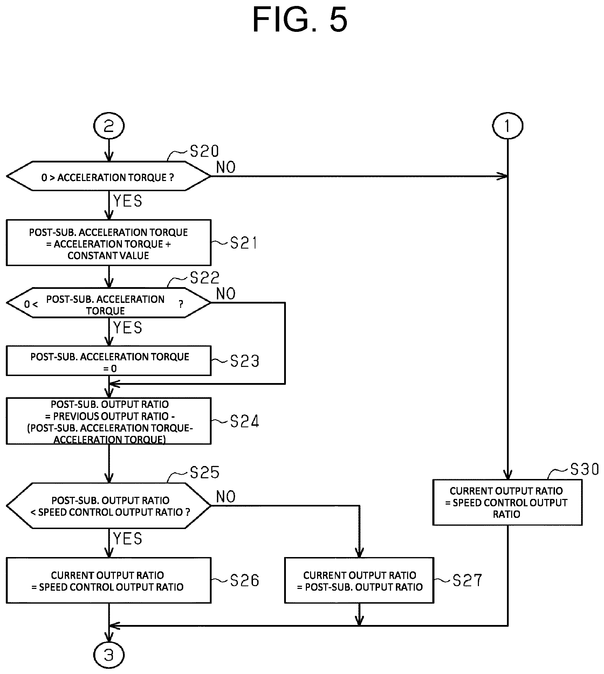

As shown in FIGS. 4 and 5, in Step S1, the output ratio corrector 47 determines whether or not the rotational speed command is zero, the current mode is the normal mode, and an acceleration output ratio is a value excluding zero. The rotational speed command becomes zero when the accelerator member 25 is not operated. Accordingly, it is determined whether the accelerator member 25 is no longer operated or the accelerator member 25 is continuously operated by determining whether or not the rotational speed command is zero. Since the normal mode is set when the boost mode is not set, it is determined whether or not the boost mode is set in Step S1. The acceleration output ratio may take a value in a range from zero to a predetermined maximum number. The predetermined maximum number is, for example, 10000. The acceleration output ratio is calculated by the acceleration torque calculation control described later. When the acceleration output torque is zero, the acceleration torque also becomes zero. Accordingly, in Step S1, the output ratio corrector 47 may determine whether or not the rotational speed command is zero, the current mode is the normal mode, and the acceleration output ratio is a value excluding zero. In this case, the acceleration torque may be calculated in the same way as that in Step S2, which will be described later.

If a determination result is "NO" in Step S1, the output ratio corrector 47 proceeds to Step S30. In Step S30, the output ratio corrector 47 sets a current output ratio to the speed control output ratio. The current output ratio is an output ratio at a current control cycle. That is, the current output ratio means the output ratio output from the output ratio determiner 41 to the torque current command calculator 31.

If the determination result is "YES" in Step S1, the output ratio corrector 47 proceeds to Step S2. In Step S2, the output ratio corrector 47 calculates acceleration torque. The output ratio includes an acceleration component that contributes to acceleration of the forklift truck 10 and a braking component that contributes to braking of the forklift truck 10. The acceleration torque is the acceleration component of the output ratio. The acceleration torque is calculated by multiplying the previous output ratio by the acceleration output ratio divided by the predetermined maximum number. Thus, the acceleration torque is expressed as a percentage similarly to the output ratio. The previous output ratio is an output ratio at a previous control cycle. The predetermined maximum number is the maximum number that the above-described acceleration output ratio may take. A value obtained by subtracting the acceleration torque from the output ratio is braking torque. The braking torque is the braking component of the output ratio. The output ratio corrector 47 also may calculate the braking torque by subtracting the acceleration torque from the output ratio.

Next, in Step S3, the output ratio corrector 47 determines whether or not the calculated acceleration torque is more than zero. A positive or negative sign of the acceleration torque is the same as a positive or negative sign of the previous output ratio. Accordingly, when the previous output ratio has a positive sign, the acceleration torque also has a positive sign. When the previous output ratio has a negative sign, the acceleration torque also has a negative sign. If a determination result is "YES" in Step S3, the output ratio corrector 47 proceeds to Step S4.

In Step S4, the output ratio corrector 47 sets a post-subtraction acceleration torque to a value obtained by subtracting a constant value [%] from the acceleration torque. The constant value is set based on a target time required for making the acceleration torque zero. The process in Step S4 is executed at each control cycle, and thus, the post-subtraction acceleration torque approaches zero by the constant value at each control cycle. Accordingly, the target time required for making the acceleration torque zero is determined by the control period and the constant value. For example, it is assumed that the target time required for making the acceleration torque zero is 300 [ms], and the control period is 4 [ms]. When it is assumed that the acceleration torque of 100 [%], which is the maximum value that the acceleration torque may take, is made zero within the target time, the constant value is set to 1.33 [%].

Next, in Step S5, the output ratio corrector 47 determines whether or not the post-subtraction acceleration torque is less than zero. That is, the output ratio corrector 47 determines whether or not the post-subtraction acceleration torque becomes less than zero by repeating the process in Step S4. If a determination result is "NO" in Step S5, the output ratio corrector 47 proceeds to Step S7. If the determination result is "YES" in Step S5, the output ratio corrector 47 proceeds to Step S6.

In Step S6, the output ratio corrector 47 sets the post-subtraction acceleration torque to zero, and proceeds to Step S7. Even when the post-subtraction acceleration torque becomes less than zero, the post-subtraction acceleration torque is set to zero in Step S6. That is, the lowest value of the post-subtraction acceleration torque is zero.

In Step S7, the output ratio corrector 47 calculates a post-subtraction output ratio. The post-subtraction output ratio is calculated as follows: the post-subtraction output ratio = the previous output ratio - (the acceleration torque - the post-subtraction acceleration torque). When a difference between the acceleration torque and the post-subtraction acceleration torque is calculated, the value subtracted from the acceleration torque in Step S4 is obtained. This value is subtracted from the previous output ratio, so that the post-subtraction output ratio is obtained. Since the constant value is subtracted from the post-subtraction acceleration torque at each control cycle, when the post-subtraction acceleration torque is more than zero, the constant value is also subtracted from the post-subtraction output ratio at each control cycle. The constant value is a predetermined value that is subtracted from the acceleration torque of the previous output ratio.

Next, in Step S8, the output ratio corrector 47 determines whether or not the post-subtraction output ratio is more than the speed control output ratio. If a determination result is "YES" in Step S8, the output ratio corrector 47 proceeds to Step S9. In Step S9, the output ratio corrector 47 sets the current output ratio to the speed control output ratio. If the determination result is "NO" in Step S8, the output ratio corrector 47 proceeds to Step S10. In Step S10, the output ratio corrector 47 sets the current output ratio to the post-subtraction output ratio.

In Steps S8 to S10, the output ratio corrector 47 sets the current output ratio to a smaller one of the speed control output ratio and the post-subtraction output ratio.

If the determination result is "NO" in Step S3, the output ratio corrector 47 proceeds to Step S20. In Step S20, the output ratio corrector 47 determines whether or not the acceleration torque is less than zero. If a determination result is "NO" in Step S20, the output ratio corrector 47 proceeds to Step S30. If the determination result is "YES" in Step S20, the output ratio corrector 47 proceeds to Step S21.

In Step S21, the output ratio corrector 47 sets the post-subtraction acceleration torque to a value obtained by adding the constant value [%] to the acceleration torque. The constant value is the same as that in Step S4.

Next, in Step S22, the output ratio corrector 47 determines whether or not the post-subtraction acceleration torque is more than 0. That is, the output ratio corrector 47 determines whether or not the post-subtraction acceleration torque becomes more than zero by repeating the process in Step S21. If a determination result is "NO" in Step S22, the output ratio corrector 47 proceeds to Step S24. If the determination result is "YES" in Step S22, the output ratio corrector 47 proceeds to Step S23.

In Step S23, the output ratio corrector 47 sets the post-subtraction acceleration torque to zero, and proceeds to Step S24.

In Step S24, the output ratio corrector 47 calculates the post-subtraction output ratio. The post-subtraction output ratio is calculated as follows: the post-subtraction output ratio = the previous output ratio - (the post-subtraction acceleration torque - the acceleration torque).

Next, in Step S25, the output ratio corrector 47 determines whether or not the post-subtraction output ratio is less than the speed control output ratio. If a determination result is "YES" in Step S25, the output ratio corrector 47 proceeds to Step S26. In Step S26, the output ratio corrector 47 sets the current output ratio to the speed control output ratio. If the determination result is "NO" in Step S25, the output ratio corrector 47 proceeds to Step S27. In Step S27, the output ratio corrector 47 sets the current output ratio to the post-subtraction output ratio.

In Steps S25 to S27, the output ratio corrector 47 sets the current output ratio to a larger one of the speed control output ratio and the post-subtraction output ratio.

As described above, the processes in Steps S4 to S10 are processes for decreasing the acceleration torque when the acceleration torque has the positive sign and obtains the current output ratio having the decreased acceleration torque. The processes in Steps S21 to S27 are processes for decreasing the acceleration torque when the acceleration torque has the negative sign and obtains the current output ratio having the decreased acceleration torque. That is, regardless of whether the acceleration torque has the positive sign or negative sign, the process of decreasing the acceleration torque is executed. In the acceleration torque subtraction process, the output ratio corrector 47 obtains a value obtained by decreasing the acceleration torque by the constant value at one control cycle as the output ratio at the current control cycle. The process of decreasing the braking torque is not executed in the acceleration torque subtraction process, and thus, only the acceleration torque is decreased. "Decreasing the acceleration torque" means making the acceleration torque closer to zero, that is, decreasing an absolute value of the acceleration torque.

### <Acceleration torque calculation control>

The following will describe the acceleration torque calculation control performed by the output ratio corrector 47.

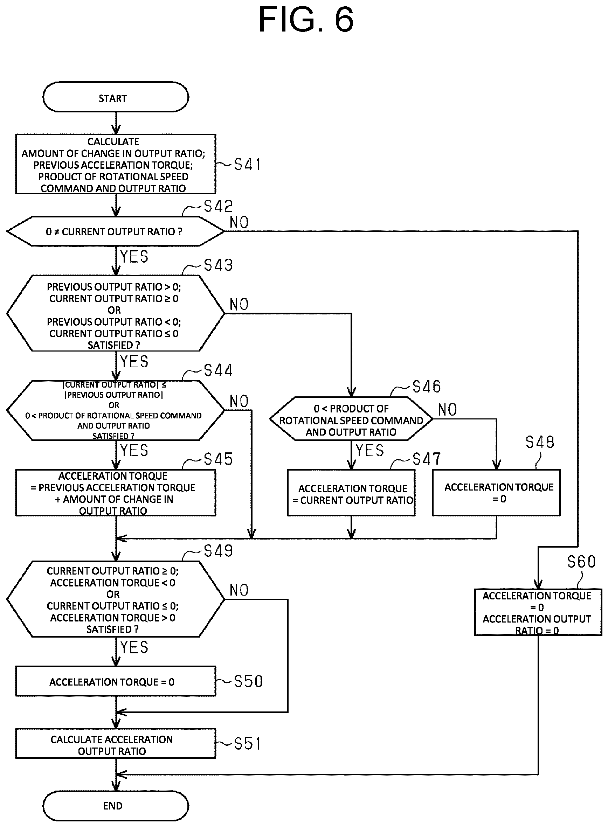

As shown in FIG. 6, in Step S41, the output ratio corrector 47 calculates an amount of change in the output ratio, the previous acceleration torque, and a product of the rotational speed command and the output ratio. The amount of change in the output ratio is calculated by subtracting the previous output ratio from the current output ratio. The previous acceleration torque is calculated by multiplying the previous output ratio by the previous acceleration output ratio divided by the predetermined maximum number. The previous acceleration torque is acceleration torque at the previous control cycle. The previous output ratio is an output ratio at the previous control cycle. The predetermined maximum number is the maximum number that the above-described acceleration output ratio may take. The product of the rotational speed command and the output ratio is calculated by multiplying the rotational speed command by the current output ratio.

Next, in Step S42, the output ratio corrector 47 determines whether or not the current output ratio is a value excluding zero. If a determination result is "NO" in Step S42, the output ratio corrector 47 proceeds to Step S60. In Step S60, the output ratio corrector 47 sets the acceleration torque to zero. In addition, the output ratio corrector 47 sets the acceleration output ratio to zero. The acceleration torque is the acceleration component of the output ratio that contributes to the acceleration of the forklift truck 10, and thus, when the current output ratio is zero, the acceleration torque and the acceleration output ratio also becomes zero.

If the determination result is "YES" in Step S42, the output ratio corrector 47 proceeds to Step S43.

In Step S43, the output ratio corrector 47 determines whether or not either of a condition in which the previous output ratio is more than zero and the current output ratio is zero or more or a condition in which the previous output ratio is less than zero and the current output ratio is zero or less is satisfied. When either of the above-described two conditions is satisfied, the positive or negative sign of the output ratio is not changed during one control cycle. That is, the torque at the current control cycle is not changed so as to go through zero from the torque at previous control cycle. The positive or negative sign of the output ratio coincides with the positive or negative sign of the torque. If a determination result is "YES" in Step S43, the output ratio corrector 47 proceeds to Step S44.

In Step S44, the output ratio corrector 47 determines whether or not either of a first condition in which an absolute value of the current output ratio is an absolute value of the previous output ratio or less or a second condition in which the product of the rotational speed command and the output ratio is more than zero is satisfied. When the absolute value of the current output ratio is the absolute value of the previous output ratio or less, the torque is changed so as to approach zero during one control cycle, or the torque is not changed during one control cycle. If the product of the rotational speed command and the output ratio is more than zero, the positive or negative sign of the rotational speed command coincides with the positive or negative of the output ratio. When the positive or negative sign of the rotational speed command coincides with the positive or negative sign of the output ratio, the travelling motor 24 performs the power-running operation in accordance with the operation of the accelerator member 25 by an operator of the forklift truck 10. If a determination result is "NO" in Step S44, the output ratio corrector 47 proceeds to Step S49.

**If** a determination result is "YES" in Step S44, the output ratio corrector 47 proceeds to Step S45. In Step S45, the output ratio corrector 47 sets the acceleration torque to a sum of the previous acceleration torque and the amount of change in the output ratio. When the first condition is satisfied, the output ratio is decreased or maintained during one control cycle. When the output ratio is decreased during one control cycle, the amount of change in the output ratio has a negative value, so that the acceleration torque is decreased. When the output ratio is maintained during the one control cycle, the amount of change in the output ratio is zero, so that the acceleration torque is maintained. When the first condition is not satisfied, the output ratio increases. When the product of the rotational speed command and the output ratio is more than zero, the travelling motor 24 performs the power-running operation, and thus, the output ratio increased in this case corresponds to the acceleration torque. When the product of the rotational speed command and the output ratio is less than zero, the travelling motor 24 performs the regenerative operation, and thus, the output ratio increased in this case corresponds to the braking torque. When the second condition is satisfied, the amount of change in the output ratio has a positive value, so that the acceleration torque is increased. Thus, when the torque at the current control cycle is not changed so as to go through zero from the torque at the previous control cycle and either of the first condition or the second condition is satisfied, the output ratio corrector 47 accumulates a difference between the output ratio at the current control cycle and the output ratio at the previous control cycle as the acceleration torque. The increase or decrease of the acceleration torque depends on whether the first condition or the second condition is satisfied.

If the determination result is "NO" in Step S43, the output ratio corrector 47 proceeds to Step S46.

In Step S46, the output ratio corrector 47 determines whether or not the product of the rotational speed command and the output ratio is more than zero. When a determination result is "YES" in Step S46, the output ratio corrector 47 proceeds to Step S47. In Step S47, the output ratio corrector 47 sets the acceleration torque to the current output ratio, and proceeds to Step S49. When the determination result is "NO" in Step S46, the output ratio corrector 47 proceeds to Step S48. In Step S48, the output ratio corrector 47 sets the acceleration torque to zero, and proceeds to Step S49.

The acceleration torque is determined by executing the processes in Steps S43 to S48. If the determination results in Steps S43 and S44 are "YES", the acceleration torque is set to the sum of the previous acceleration torque and the amount of change in the output ratio. That is, while the determination results in Steps S43 and S44 continue to be "YES", the acceleration torque has been accumulated. When the determination result is "NO" in Step S43 and the determination result is "YES" in Step S46, the acceleration torque is set to the current output ratio. If the determination results in Steps S43 and S46 are "NO", the acceleration torque is set to zero.

In Step S49, the output ratio corrector 47 determines whether or not either of a condition in which the current output ratio is zero or more and the acceleration torque is less than zero or a condition in which the current output ratio is zero or less and the acceleration torque is more than zero is satisfied. When a determination result is "NO" in Step S49, the output ratio corrector 47 proceeds to Step S51. When the determination result is "YES" in Step S49, the output ratio corrector 47 proceeds to Step S50.

In Step S50, the output ratio corrector 47 sets the acceleration torque to zero, and proceeds to Step S51.

In Step S51, the output ratio corrector 47 calculates the acceleration output ratio from the current output ratio and the acceleration torque, which is determined in Step S45, Step S47, Step S48, or Step S50. That is, the output ratio corrector 47 calculates the acceleration output ratio from the current output ratio and the acceleration torque calculated using the amount of change in the output ratio, the previous acceleration torque, and the product of the rotational speed command and the output ratio. Here, the acceleration output ratio is calculated by multiplying the acceleration torque by the predetermined maximum number divided by the current output ratio. The predetermined maximum number is the maximum number that the above-described acceleration output ratio may take. The acceleration output ratio is a value obtained by converting the acceleration torque, which is the acceleration component of the output ratio that contributes to the acceleration of the forklift truck 10, into a numerical value with the predetermined maximum number as an upper limit. After calculating the acceleration output ratio in Step S51, the output ratio corrector 47 ends the acceleration torque calculation control.

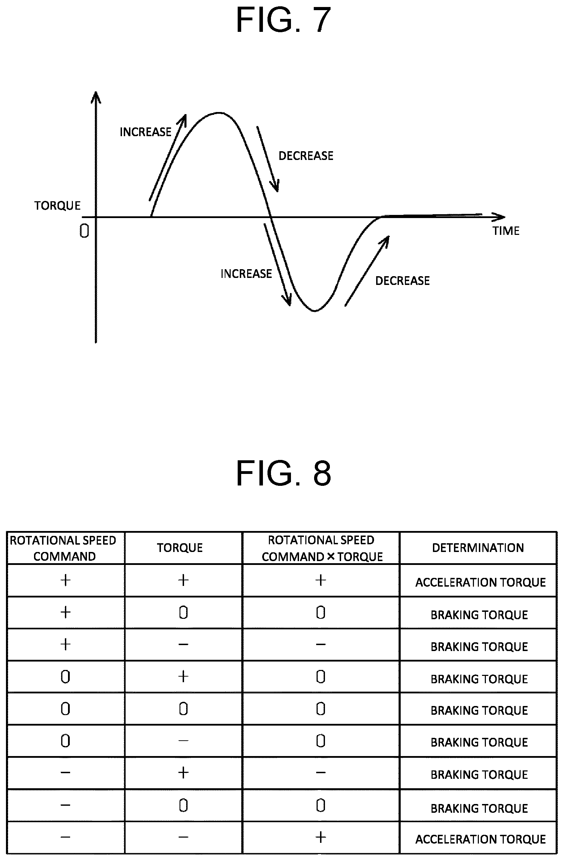

The above-described acceleration torque calculation control is shown in FIGS. 7 and 8.

As shown in FIG. 7, a change of torque in which the torque is away from zero is defined as the increase of the torque. A change of the torque in which the torque approaches zero is defined as the decrease of the torque.

As shown in FIG. 8, the torque in a state where the positive or negative sign of the rotational speed command coincides with the positive or negative sign of the torque is defined as the acceleration torque. The torque in a state where the positive or negative sign of the rotational speed command does not coincide with that of the torque is defined as the braking torque. The torque in a state where at least one of the rotational speed command or the torque is zero is also defined as the braking torque. The state where the positive or negative sign of the rotational speed command coincides with the positive or negative sign of the torque includes a state where the operator of the forklift truck 10 operates the accelerator member 25 to cause the forklift truck 10 to travel forward. The state where the positive or negative sign of the rotational speed command coincides with the positive or negative sign of the torque includes a state where the operator of the forklift truck 10 operates the accelerator member 25 to cause the forklift truck 10 to travel rearward. The positive or negative sign of the torque is the same as the positive or negative sign of the current output ratio. It is determined whether or not the positive or negative sign of the rotational speed command coincides with the positive or negative sign of the torque by determining whether or not the product of the rotational speed command and the current output ratio is more than zero.

As shown in FIGS. 7 and 8, when the torque is not changed so as to go through zero, the acceleration torque is calculated by accumulating the difference of the output ratio during one control cycle in accordance with the increase or decrease of the torque.

When the forklift truck 10 performs the inserting operation on a flat road, the output ratio at the previous control cycle includes only the acceleration torque. This is because the forklift truck 10 need not be stopped by the braking torque on the flat road, and thus, only the acceleration torque is increased by the inserting operation. The inserting operation is an operation of deeply inserting the forks 14 under the placed load L.

When the forklift truck 10 is stopped on a slope, the output ratio at the previous control cycle includes only the braking torque. This is because the forklift truck 10 needs to be stopped by the braking torque when the forklift truck 10 is stopped on the slope. Here, when the forklift truck 10 is stopped on the slope, the acceleration torque is zero.

### [Operation of the present embodiment]

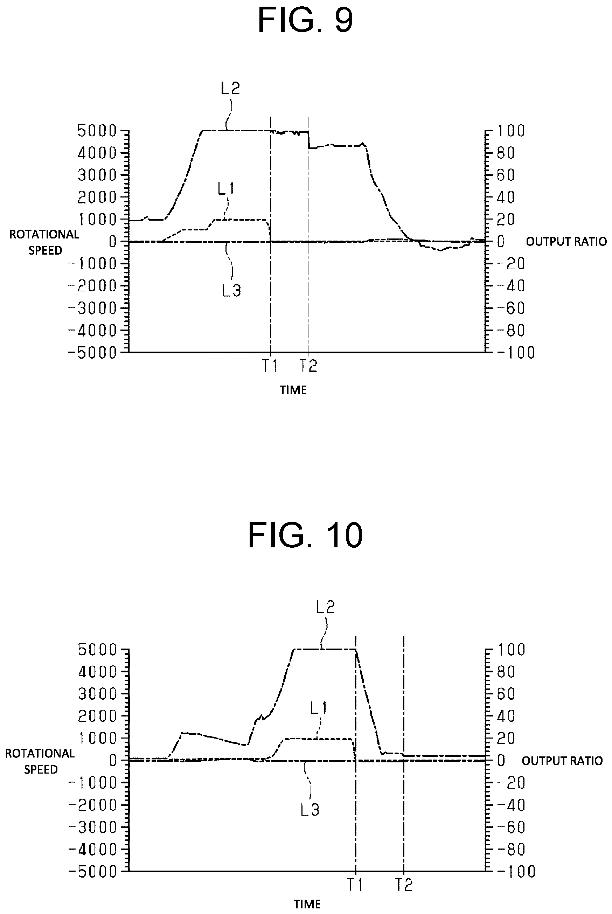

FIGS. 9 and 10 each show a relationship among the rotational speed command, the output ratio, and the actual rotational speed. In FIGS. 9 and 10, a line L1, a line L2, a line L3 represent the rotational speed command, the output ratio, and the actual rotational speed, respectively.

FIG. 9 shows a relationship among the rotational speed command, the output ratio, and the actual rotational speed when the acceleration torque subtraction control and the acceleration torque calculation control are not performed, as a comparative example.

It is assumed that the inserting operation has been performed until a time T1. The inserting operation brings the load L into contact with the masts 16. Even when the accelerator member 25 is operated in this state, the forklift truck 10 does not travel because of a static friction force generated at an interface between the load L and a place where the load L is placed. Accordingly, the error between the rotational speed command and the actual rotational speed increases. As the error increases, the output ratio, that is, the torque of the travelling motor 24 also increases.

When the inserting operation is no longer performed at the time T1, the accelerator member 25 is no longer operated, which makes the rotational speed command zero. In a case where the error between the rotational speed command and the actual rotational speed is zero, the error between the target rotational speed and the actual rotational speed is also zero. The feedback gains such as the proportional gain and the integral gain are applied to the error to decrease the future error, and thus, when the error is zero, the output ratio right before is maintained. When the inserting operation has been performed, the output ratio when the inserting operation has been performed is maintained.

When the forks 14 start to be raised at a time T2, the load L is lifted by the forks 14. With this operation, the load L and the place where the load L is placed are no longer in contact with each other, so that a static frictional force ceases to act on the forklift truck 10. Since the output ratio when the inserting operation has been performed is maintained, the forklift truck 10 starts to travel by the torque generated by this output ratio. Then, when the forklift truck 10 starts to travel, the error between the rotational speed command and the actual rotational speed increases, which changes the output ratio so as to stop the forklift truck 10. As a result, although the forklift truck 10 stops, this may cause the operator of the forklift truck 10 to feel strange in maneuverability of the forklift truck 10.

FIG. 10 shows a relationship among the rotational speed command, the output ratio, and the actual rotational speed command of the forklift truck 10 according to the present embodiment.

**It** is assumed that the forklift truck 10 has performed the inserting operation until the time T1. This operation causes the output ratio to increase. As is seen from FIG. 10, in the inserting operation, the positive or negative sign of the rotational speed command coincides with the positive or negative sign of the output ratio. Accordingly, while the inserting operation is continuously performed, the acceleration torque is accumulated.

When the inserting operation is no longer performed at the time T1, the accelerator member 25 is no longer operated, which makes the rotational speed command zero. When the rotational speed command becomes zero, the acceleration torque is decreased from the previous output ratio until the acceleration output ratio becomes zero. In other words, the output ratio is decreased from the output ratio at the time when the rotational speed command becomes zero with the acceleration torque at the time as an upper limit. This process causes the output ratio to decrease from the time T1. In the acceleration torque subtraction control, only the acceleration torque calculated in the acceleration torque calculation control is decreased. As a result, the braking torque of the output ratio remains.

The forks 14 start to be raised at the time T2 and the load L and the place where the load L is placed are no longer in contact with each other, so that the static frictional force ceases to act on the forklift truck 10. However, the acceleration torque is removed from the output ratio at this stage. This prevents the forklift truck 10 from starting to travel even though the accelerator member 25 is not operated.

### [Advantageous effects of the present embodiment]

(1) When the rotational speed command is zero, the controller 30 decreases the acceleration torque. When the rotational speed command becomes zero upon completion of the inserting operation, the output ratio decreases, and thus, the torque decreases. Accordingly, when the load L and the place where the load L is placed are no longer in contact with each other, so that the static frictional force ceases to act on the forklift truck 10, the forklift truck 10 is prevented from starting to travel even though the accelerator member 25 is not operated. This may suppress that the operator of the forklift truck 10 is caused to feel strange in the maneuverability of the forklift truck.
   In addition, the braking torque of the output ratio that contributes to the braking of the forklift truck 10 remains by decreasing only the acceleration torque. As a result, when the output ratio is required for stopping the forklift truck 10, for example, the forklift truck 10 is stopped on the slope, it is possible to stop the forklift truck 10 by the braking torque.
(2) When the forklift truck 10 performs the inserting operation on the flat road, the output ratio at the previous control cycle includes only the acceleration torque. Accordingly, after the forklift truck 10 ends the inserting operation, the output ratio is decreased. The acceleration torque is decreased after the forklift truck 10 ends the inserting operation, which prevents the forklift truck 10 from starting to travel after the inserting operation even though the accelerator member 25 is not operated.
(3) When the forklift truck 10 is stopped on the slope, the output ratio at the previous control cycle includes only the braking torque. The braking torque is not decreased by the acceleration torque subtraction control, so that the forklift truck 10 is stopped on the slope by the braking torque.
(4) The controller 30 subtracts the constant value from the acceleration torque at each control cycle. This prevents the acceleration torque from rapidly decreasing.

### [Modification]

The present embodiment may be modified as follows. The present embodiment and the following modification may be combined to each other as long as they do not technically contradict each other.

The controller 30 may perform a proportional-integral-derivative control as the feedback control.

The forklift truck 10 may include the mechanical brake.

The predetermined value is not limited to the constant value. For example, the predetermined value may be a variable value that increases at each control cycle or may be a variable value that decreases at each control cycle.

The controller 30 need not have the boost mode.

## Claims

1. A forklift truck (10) comprising:
an accelerator member (25);
a travelling motor (24);
an inverter (22) that is configured to drive the travelling motor (24); and
a controller (30) that is configured to control the inverter (22),
the controller (30) being configured to obtain a rotational speed command in accordance with an amount of operation of the accelerator member (25),
the controller (30) being configured to calculate a target rotational speed based on the rotational speed command, an acceleration command, and a deceleration command,
the controller (30) being configured to calculate an error between a rotational speed of the travelling motor (24) and the target rotational speed,
the controller (30) being configured to calculate an output ratio of the travelling motor (24) based on the error, a proportional gain, and an integral gain,
the controller (30) being configured to calculate a torque current command value based on the output ratio and a torque current curve, and
the controller (30) being configured to convert the torque current command value into a command value for the inverter (22) to perform a control of the travelling motor (24) such that the rotational speed of the travelling motor (24) follows the target rotational speed, wherein
a component of the output ratio that contributes to acceleration of the forklift truck (10) is defined as an acceleration component, and
a component of the output ratio that contributes to braking of the forklift truck (10) is defined as a braking component,
**characterized in that**
the controller (30) is configured to accumulate a difference between the output ratio at a current control cycle and the output ratio at a previous control cycle as the acceleration component when torque of the travelling motor (24) at the current control cycle is not changed so as to go through zero from the torque of the travelling motor (24) at the previous control cycle and when either of a first condition in which an absolute value of the output ratio at the current control cycle is an absolute value of the output ratio at the previous control cycle or less or a second condition in which a product between the rotational speed command and the output ratio at the current control cycle is more than zero is satisfied,
the controller (30) is configured to calculate an acceleration output ratio with a predetermined maximum number as an upper limit from the acceleration component and the output ratio at the current control cycle, and
the controller (30) is configured to set the output ratio at the current control cycle to a value obtained by decreasing only the acceleration component of the output ratio at the previous control cycle by a predetermined value when the rotational speed command at the current control cycle is zero and the acceleration output ratio is a value excluding zero.

2. The forklift truck (10) according to claim 1, **characterized in that**
when the forklift truck 10 performs an inserting operation on a flat road, the output ratio at the previous control cycle includes only the acceleration component.

3. The forklift truck (10) according to claim 1 or 2, **characterized in that**
when the forklift truck (10) is stopped on a slope, the output ratio at the previous control cycle includes only the braking component.

4. A method for controlling a forklift truck (10) that includes an accelerator member (25), a travelling motor (24), an inverter (22) that drives the travelling motor (24), and a controller (30) that controls the inverter (22),
the method for controlling the forklift truck (10) comprising:
obtaining a rotational speed command in accordance with an amount of operation of the accelerator member (25) by the controller (30);
calculating a target rotational speed based on the rotational speed command, an acceleration command, and a deceleration command by the controller (30);
calculating an error between a rotational speed of the travelling motor (24) and the target rotational speed by the controller (30);
calculating an output ratio of the travelling motor (24) based on the error, a proportional gain, and an integral gain by the controller (30);
calculating a torque current command value based on the output ratio and a torque current curve by the controller (30); and
converting the torque current command value into a command value for the inverter (22) to perform a control of the travelling motor (24) such that the rotational speed of the travelling motor (24) follows the target rotational speed by the controller (30), wherein
a component of the output ratio that contributes to acceleration of the forklift truck (10) is defined as an acceleration component, and
a component of the output ratio that contributes to braking of the forklift truck (10) is defined as a braking component,
**characterized in that** the method for controlling the forklift truck (10) includes:
accumulating a difference between the output ratio at a current control cycle and the output ratio at a previous control cycle as the acceleration component by the controller (30) when torque of the travelling motor (24) at the current control cycle is not changed so as to go through zero from the torque of the travelling motor (24) at the previous control cycle and when either of a first condition in which an absolute value of the output ratio at the current control cycle is an absolute value of the output ratio at the previous control cycle or less or a second condition in which a product between the rotational speed command and the output ratio at the current control cycle is more than zero is satisfied;
calculating an acceleration output ratio with a predetermined maximum number as an upper limit from the acceleration component and the output ratio at the current control cycle; and
setting the output ratio at the current control cycle to a value obtained by decreasing only the acceleration component of the output ratio at the previous control cycle by a predetermined value by the controller (30) when the rotational speed command at the current control cycle is zero and the acceleration output ratio is a value excluding zero.

## Patentansprüche

1. Gabelstapler (10) mit:
einem Beschleunigungseinrichtungselement (25);
einem Fahrmotor (24);
einem Wechselrichter (22), der konfiguriert ist, den Fahrmotor (24) anzutreiben; und
einer Steuerungseinrichtung (30), die konfiguriert ist, den Wechselrichter (22) zu steuern,
wobei die Steuerungseinrichtung (30) konfiguriert ist, einen Drehzahlbefehl entsprechend einem Betätigungsbetrag des Beschleunigungseinrichtungselements (25) zu erhalten,
wobei die Steuerungseinrichtung (30) konfiguriert ist, eine Solldrehzahl auf der Grundlage des Drehzahlbefehlswerts, eines Beschleunigungsbefehls und eines Verzögerungsbefehls zu berechnen,
wobei die Steuerungseinrichtung (30) konfiguriert ist, einen Fehler zwischen einer Drehzahl des Fahrmotors (24) und der Solldrehzahl zu berechnen,
wobei die Steuerungseinrichtung (30) konfiguriert ist, ein Ausgabeverhältnis des Fahrmotors (24) auf der Grundlage des Fehlers, einer Proportionalverstärkung und einer Integralverstärkung zu berechnen,
wobei die Steuerungseinrichtung (30) konfiguriert ist, einen Drehmomentstrombefehlswert auf der Grundlage des Ausgabeverhältnisses und einer Drehmomentstromkurve zu berechnen,
wobei die Steuerungseinrichtung (30) konfiguriert ist, den Drehmomentstrombefehlswert in einen Befehlswert für den Wechselrichter (22) umzuwandeln, um eine Steuerung des Fahrmotors (24) derart auszuführen, dass die Drehzahl des Fahrmotors (24) der Solldrehzahl folgt, wobei
eine Komponente des Ausgabeverhältnisses, die zu einer Beschleunigung des Gabelstaplers (10) beiträgt, als eine Beschleunigungskomponente definiert ist und
eine Komponente des Ausgabeverhältnisses, die zu einem Bremsen des Gabelstaplers (10) beiträgt, als eine Bremskomponente definiert ist,
**dadurch gekennzeichnet, dass**
die Steuerungseinrichtung (30) konfiguriert ist, eine Differenz zwischen dem Ausgabeverhältnis eines derzeitigen Steuerungszyklus und dem Ausgabeverhältnis eines vorangegangenen Steuerungszyklus als die Beschleunigungskomponente aufzurechnen, wenn ein Drehmoment des Fahrmotors (24) bei dem derzeitigen Steuerungszyklus von dem Drehmoment des Fahrmotors (24) bei dem vorangegangenen Steuerungszyklus nicht geändert wird, um durch Null zu gehen, und wenn eine aus einer ersten Bedingung, bei der ein Absolutwert des Ausgabeverhältnisses bei dem derzeitigen Steuerungszyklus ein Absolutwert des Ausgabeverhältnisses bei dem vorangegangenen Steuerungszyklus oder weniger ist, oder einer zweiten Bedingung, bei der ein Produkt zwischen dem Drehzahlbefehl und dem Ausgabeverhältnis bei dem derzeitigen Steuerungszyklus größer als Null ist, erfüllt ist,
die Steuerungseinrichtung (30) konfiguriert ist, ein Beschleunigungsausgabeverhältnis mit einer vorbestimmten maximalen Zahl als eine obere Grenze aus der Beschleunigungskomponente und dem Ausgabeverhältnis bei dem derzeitigen Steuerungszyklus zu berechnen, und
die Steuerungseinrichtung (30) konfiguriert ist, das Ausgabeverhältnis bei dem derzeitigen Steuerungszyklus auf einen Wert einzustellen, der erhalten wird, indem lediglich die Beschleunigungskomponente des Ausgabeverhältnisses bei dem vorangegangenen Steuerungszyklus um einen vorbestimmten Wert verkleinert wird, wenn der Drehzahlbefehl bei dem derzeitigen Steuerungszyklus Null ist und das Beschleunigungsausgabeverhältnis ein Wert ist, der Null ausschließt.

2. Gabelstapler (10) nach Anspruch 1, **dadurch gekennzeichnet, dass**,
wenn der Gabelstapler 10 einen Einführbetrieb auf einer flachen Straße ausführt, das Ausgabeverhältnis bei dem vorangegangenen Steuerungszyklus lediglich die Beschleunigungskomponente umfasst.

3. Gabelstapler (10) nach Anspruch 1 oder 2, **dadurch gekennzeichnet, dass**,
wenn der Gabelstapler (10) auf einer geneigten Fläche gestoppt wird, das Ausgabeverhältnis bei dem vorangegangenen Steuerungszyklus lediglich die Bremskomponente umfasst.

4. Verfahren zum Steuern eines Gabelstaplers (10), der ein Beschleunigungseinrichtungselement (25), einen Fahrmotor (24), einen Wechselrichter (22), der den Fahrmotor (24) antreibt, und eine Steuerungseinrichtung (30) umfasst, die den Wechselrichter (22) steuert,
wobei das Verfahren zum Steuern des Gabelstaplers (10) umfasst:
ein Erhalten eines Drehzahlbefehls entsprechend einem Betrag einer Betätigung des Beschleunigungseinrichtungselements (25) durch die Steuerungseinrichtung (30);
ein Berechnen einer Solldrehzahl auf der Grundlage des Drehzahlbefehls, eines Beschleunigungsbefehls und eines Verzögerungsbefehls durch die Steuerungseinrichtung (30);
ein Berechnen eines Fehlers zwischen einer Drehzahl des Fahrmotors (24) und der Solldrehzahl durch die Steuerungseinrichtung (30);
ein Berechnen eines Ausgabeverhältnisses des Fahrmotors (24) auf der Grundlage des Fehlers, einer Proportionalverstärkung und einer Integralverstärkung durch die Steuerungseinrichtung (30);
ein Berechnen eines Drehzahlstrombefehlswerts auf der Grundlage des Ausgabeverhältnisses und einer Drehmomentstromkurve durch die Steuerungseinrichtung (30); und
ein Umwandeln des Drehmomentstrombefehlswerts in einen Befehlswert für den Wechselrichter (22), um eine Steuerung des Fahrmotors (24) derart auszuführen, dass die Drehzahl des Fahrmotors (24) der Solldrehzahl folgt, durch die Steuerungseinrichtung (30), wobei
eine Komponente des Ausgabeverhältnisses, die zu einer Beschleunigung des Gabelstaplers (10) beiträgt, als eine Beschleunigungskomponente definiert ist und
eine Komponente des Ausgabeverhältnisses, die zu einem Bremsen des Gabelstaplers (10) beiträgt, als eine Bremskomponente definiert ist,
**dadurch gekennzeichnet, dass** das Verfahren zum Steuern des Gabelstaplers (10) umfasst:
ein Aufrechnen einer Differenz zwischen dem Ausgabeverhältnis eines derzeitigen Steuerungszyklus und dem Ausgabeverhältnis bei einem vorangegangenen Steuerungszyklus als die Beschleunigungskomponente durch die Steuerungseinrichtung (30), wenn ein Drehmoment des Fahrmotors (24) bei dem derzeitigen Steuerungszyklus von dem Drehmoment des Fahrmotors (24) bei dem vorangegangenen Steuerungszyklus nicht geändert wird, um durch Null zu gehen, und wenn eine aus einer ersten Bedingung, bei der ein Absolutwert des Ausgabeverhältnisses bei dem derzeitigen Steuerungszyklus ein Absolutwert des Ausgabeverhältnisses bei dem vorangegangenen Steuerungszyklus oder weniger ist, oder einer zweiten Bedingung, bei der ein Produkt zwischen dem Drehzahlbefehl und dem Ausgabeverhältnis bei dem derzeitigen Steuerungszyklus größer als Null ist, erfüllt ist;
ein Berechnen eines Beschleunigungsausgabeverhältnisses mit einer vorbestimmten maximalen Zahl als eine obere Grenze aus der Beschleunigungskomponente und dem Ausgabeverhältnis bei dem derzeitigen Steuerungszyklus; und
einem Einstellen des Ausgabeverhältnisses bei dem derzeitigen Steuerungszyklus auf einen Wert, der erhalten wird, indem lediglich die Beschleunigungskomponente des Ausgabeverhältnisses bei dem vorangegangenen Steuerungszyklus um einen vorbestimmten Wert verkleinert wird, durch die Steuerungseinrichtung (30), wenn der Drehzahlbefehl bei dem derzeitigen Steuerungszyklus Null ist und das Beschleunigungsausgabeverhältnis ein Wert ist, der Null ausschließt.

## Revendications

1. Chariot élévateur (10) comprenant :
un élément accélérateur (25) ;
un moteur de translation (24) ;
un onduleur (22) qui est conçu pour entraîner le moteur de translation (24) ; et
un dispositif de commande (30) qui est conçu pour commander l'onduleur (22),
le dispositif de commande (30) étant conçu pour obtenir une commande de vitesse de rotation en fonction d'une quantité de fonctionnement de l'élément accélérateur (25),
le dispositif de commande (30) étant conçu pour calculer une vitesse de rotation cible en fonction de la commande de vitesse de rotation, d'une commande d'accélération, et d'une commande de décélération,
le dispositif de commande (30) étant conçu pour calculer une erreur entre une vitesse de rotation du moteur de translation (24) et la vitesse de rotation cible,
le dispositif de commande (30) étant conçu pour calculer un rapport de sortie du moteur de translation (24) en fonction de l'erreur, d'un gain proportionnel et d'un gain intégral,
le dispositif de commande (30) étant conçu pour calculer une valeur de commande de courant de couple en fonction du rapport de sortie et d'une courbe de courant de couple, et
le dispositif de commande (30) étant conçu pour convertir la valeur de commande de courant de couple en une valeur de commande pour l'onduleur (22) afin d'exécuter une commande du moteur de translation (24) de sorte que la vitesse de rotation du moteur de translation (24) suive la vitesse de rotation cible,
une composante du rapport de sortie qui contribue à l'accélération du chariot élévateur (10) étant définie comme une composante d'accélération, et
une composante du rapport de sortie qui contribue au freinage du chariot élévateur (10) étant définie comme une composante de freinage,
**caractérisé en ce que**
le dispositif de commande (30) est conçu pour accumuler une différence entre le rapport de sortie à un cycle de commande actuel et le rapport de sortie à un cycle de commande précédent en tant que composante d'accélération lorsque le couple du moteur de translation (24) au cycle de commande actuel n'est pas modifié de sorte à passer par zéro à partir du couple du moteur de translation (24) au cycle de commande précédent et lorsqu'une première condition dans laquelle une valeur absolue du rapport de sortie au cycle de commande actuel est inférieure ou égale à une valeur absolue du rapport de sortie au cycle de commande précédent ou une seconde condition dans laquelle un produit entre la commande de vitesse de rotation et le rapport de sortie au cycle de commande actuel est supérieur à zéro est satisfaite,
le dispositif de commande (30) est conçu pour calculer un rapport de sortie d'accélération avec un nombre maximum prédéfini comme limite supérieure à partir de la composante d'accélération et du rapport de sortie au cycle de commande actuel, et
le dispositif de commande (30) est conçu pour régler le rapport de sortie au cycle de commande actuel à une valeur obtenue en diminuant seulement la composante d'accélération du rapport de sortie au cycle de commande précédent d'une valeur prédéfinie lorsque la commande de vitesse de rotation au cycle de commande actuel est nulle et que le rapport de sortie accélération est une valeur excluant zéro.

2. Chariot élévateur (10) selon la revendication 1, **caractérisé en ce que**
lorsque le chariot élévateur 10 effectue une opération d'insertion sur route plate, le rapport de sortie au cycle de commande précédent ne comprend que la composante d'accélération.

3. Chariot élévateur (10) selon la revendication 1 ou 2, **caractérisé en ce que**
lorsque le chariot élévateur (10) est arrêté sur une pente, le rapport de sortie au cycle de commande précédent inclut uniquement la composante de freinage.

4. Procédé de commande d'un chariot élévateur (10) qui comprend un élément accélérateur (25), un moteur de translation (24), un onduleur (22) qui entraîne le moteur de translation (24), et un dispositif de commande (30) qui commande l'onduleur (22),
le procédé de commande du chariot élévateur (10) comprenant :
l'obtention d'une commande de vitesse de rotation en fonction d'une quantité de fonctionnement de l'élément accélérateur (25) par le dispositif de commande (30) ;
le calcul d'une vitesse de rotation cible en fonction de la commande de vitesse de rotation, d'une commande d'accélération, et d'une commande de décélération par le dispositif de commande (30) ;
le calcul d'une erreur entre une vitesse de rotation du moteur de translation (24) et la vitesse de rotation cible par le dispositif de commande (30) ;
le calcul d'un rapport de sortie du moteur de translation (24) en fonction de l'erreur, d'un gain proportionnel et d'un gain intégral par le dispositif de commande (30) ;
le calcul d'une valeur de commande de courant de couple en fonction du rapport de sortie et d'une courbe de courant de couple par le dispositif de commande (30) ; et
la conversion de la valeur de commande de courant de couple en une valeur de commande pour l'onduleur (22) afin d'effectuer une commande du moteur de translation (24) de sorte que la vitesse de rotation du moteur de translation (24) suive la vitesse de rotation cible par le dispositif de commande (30)
une composante du rapport de sortie qui contribue à l'accélération du chariot élévateur (10) étant définie comme une composante d'accélération, et
une composante du rapport de sortie qui contribue au freinage du chariot élévateur (10) étant définie comme une composante de freinage,
**caractérisé en ce que** le procédé de commande du chariot élévateur (10) comprend :
l'accumulation d'une différence entre le rapport de sortie à un cycle de commande actuel et le rapport de sortie à un cycle de commande précédent en tant que composante d'accélération par le dispositif de commande (30) lorsque le couple du moteur de translation (24) au cycle de commande actuel n'est pas modifié de sorte à passer par zéro à partir du couple du moteur de translation (24) au cycle de commande précédent et lorsqu'une première condition dans laquelle une valeur absolue du rapport de sortie au cycle de commande actuel est inférieure ou égale à une valeur absolue du rapport de sortie au cycle de commande précédent ou une seconde condition dans laquelle un produit entre la commande de vitesse de rotation et le rapport de sortie au cycle de commande actuel est supérieur à zéro est satisfaite ;
le calcul d'un rapport de sortie d'accélération avec un nombre maximum prédéfini comme limite supérieure à partir de la composante d'accélération et du rapport de sortie au cycle de commande actuel ; et
le réglage du rapport de sortie au cycle de commande actuel à une valeur obtenue en diminuant seulement la composante d'accélération du rapport de sortie au cycle de commande précédent d'une valeur prédéfinie par le dispositif de commande (30) lorsque la commande de vitesse de rotation au cycle de commande actuel est nulle et que le rapport de sortie accélération est une valeur excluant zéro.
